# EUROPÄISCHE PATENTSCHRIFT

(11) **EP 0 739 847 B1**
(45) Veröffentlichungstag und Bekanntmachung des Hinweises auf die Patenterteilung: **07.07.1999**
(21) Anmeldenummer: 95810274.1
(22) Anmeldetag: 25.04.1995
(51) Int. Cl.: B65H 45/20, B21D 13/04

(54) **Verfahren zum zickzackartigen Falten einer streifenförmigen Folie**
Method for zig-zag pleating of a strip-like sheet
Méthode pour plier en accordéon une feuille en bande

(43) Veröffentlichungstag der Anmeldung: 30.10.1996
(73) Patentinhaber: Sulzer Chemtech AG, 8404 Winterthur (CH)
(72) Erfinder: Süess, Philipp, CH-8413 Neftenbach (CH); Bär, Martin, CH-8442 Hettlingen (CH); Stöckli, Xaver, CH-8805 Richterswil (CH); Stöckli, Rainer, CH-8834 Schindellegi (CH)
(74) Vertreter: Heubeck, Bernhard

(56) Entgegenhaltungen:
- EP-A- 0 377 944
- CH-A- 300 097
- DE-A- 463 105
- DE-A- 3 916 156
- PATENT ABSTRACTS OF JAPAN vol. 6 no. 267 (M-182) [1145] ,25.Dezember 1982 & JP-A-57 159221 (CHIYUUOU HATSUJIYOU K.K.) 1.Oktober 1982,
- PATENT ABSTRACTS OF JAPAN vol. 8 no. 146 (M-307) ,7.Juli 1984 & JP-A-59 042135 (SHIN NIPPON SEITETSU) 8.März 1984,

## Beschreibung

Die Erfindung betrifft ein Verfahren zum zickzackartigen Falten einer streifenförmigen Folie. Sie bezieht sich auch auf Vorrichtungen und Anlagen zum Durchführen des Verfahrens.

Zickzackartig gefaltete, sogenannte plissierte Materialstreifen werden für die Herstellung von Packungen beispielsweise für Stoff- und Wärmeaustauschkolonnen verwendet. Es gibt derartige Packungen, die zusätzliche Strukturmerkmale - beispielsweise regelmässig angeordnete Durchbrüche an vorbestimmten Stellen - aufweisen und für die eine hohe Präzision des Plissierverfahrens erforderlich ist. Gleichzeitig müssen mit einem solchen Verfahren grosse Mengen an plissierten Folien kostengünstig herstellbar sein. Mit den heute bekannten Plissierverfahren, siehe zum Beispiel JP-A-59042135, ist die erforderliche Präzision nicht erreichbar.

Es sind kostengünstige Walzverfahren zum Herstellen von plissierten Folien bekannt, die aber bezüglich der Ausbildung der Faltkanten oft ungenügend sind, da die Krümmungsradien der Faltkanten zu gross ausfallen. Ferner gibt es bei diesen Verfahren ein "Zurückspringen" des Materials, das wegen schlechter Kontrollierbarkeit zu einem Produkt mit ungleichmässiger Form führt. Es ist auch ein Prägeverfahren bekannt, bei dem die Formgebung mit einem oszillierenden Prägewerkzeug durchgeführt wird. Auch bei diesem Verfahren ist die Präzision mangelhaft. Es kommt hinzu, dass dieses Verfahren mit einer grossen Lärmentwicklung verbunden ist.

Es ist Aufgabe der Erfindung, ein Verfahren und Vorrichtungen zu schaffen, die das Plissieren von Folienstreifen kostengünstig und mit der nötigen Präzision ermöglichen. Diese Aufgabe wird durch die in den Ansprüchen genannten Mitteln und Massnahmen gelöst.

Insbesondere wird mit dem erfindungsgemässen Verfahren in einem ersten Schritt - dem sogenannten Vorplissieren - eine wellenförmige Faltung hergestellt, bei der die Scheitellinien der Faltung Vorläufer von Faltkanten darstellen und diese vorgeformten Faltkanten im Querschnitt als Bögen mit einem Krümmungsradius grösser als rund 1 mm ausgebildet sind. Anschliessend wird die Faltung mittels mindestens eines Prägewerkzeugs nachgeformt, indem entlang den Scheitellinien jeweils eine Faltkante mit einem vorgegenbenen Krümmungsradius kleiner als 1 mm erzeugt wird.

Mit Vorteil erfolgt das Nachformen in zwei Teilschritten, nämlich zuerst an jeder zweiten Faltkante und anschliessend an den übrigen Faltkanten. Ebenfalls vorteilhaft ist es, wenn in kombinierter Weise mit dem Prägewerkzeug einerseits der Faltwinkel beeinflusst und andererseits der Krümmungsradius der Faltkante verkleinert wird.

Nachfolgend wird die Erfindung anhand der Zeichnungen erläutert. Es zeigen:
- Fig. 1: eine schematische Darstellung einer Anlage, mit der das erfindungsgemässe Verfahren durchführbar ist,
- Fig. 2: einen Querschnitt durch ein oszillierendes Prägewerkzeug,
- Fig. 3: eine Taumelpressvorrichtung in Seitenansicht, die für das Nachformen eines vorplissierten Folienstreifens vorgesehen ist,
- Fig. 4: ein Prägewerkzeug mit Exzenterantrieb einer Taumelpressvorrichtung,
- Fig. 5: ein Detail zum Prägewerkzeug der Fig.4,
- Fig. 6: eine erste Arbeitsphase der Taumelpressvorrichtung und
- Fig.7a-c: drei weitere Arbeitsphasen, die auf die Phase der Fig.6 folgen.

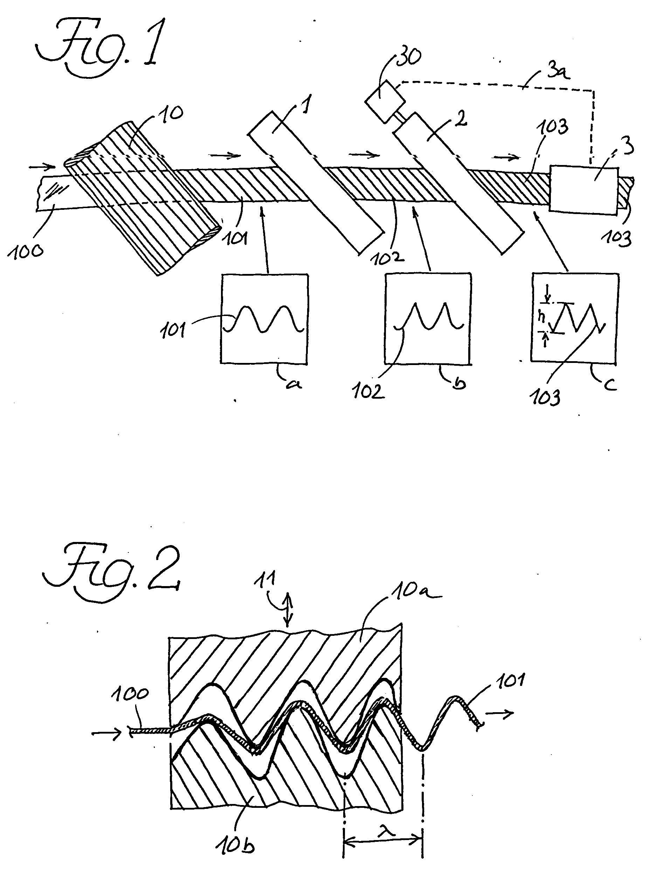

Mit der in Fig.1 dargestellten Anlage kann ein folienförmiger Materialstreifen 100 nach dem erfindungsgemässen Verfahren kontinuierlich plissiert werden. Die Faltkanten der Plissierung verlaufen schräg zur Laufrichtung des Streifens 100. Die Anlage weist folgende Komponenten auf: eine Plissierwalze 10, die ein Paar von zahnradartigen Walzen umfasst, die übereinander angeordnet sind und von denen nur die obere sichtbar ist; eine erste Taumelpressvorrichtung 1, mit der die oberen Faltkanten nachgeformt werden; eine zweite Taumelpressvorrichtung 2 für die unteren Faltkanten; und eine Einrichtung 3, die zusammen mit einer Verbindungsleitung 3a und einem an der Vorrichtung 2 angeordneten Stellmotor 30 eine Regelungseinrichtung bildet.

In dem Walzenpaar 10 erfolgt eine Vorplissierung, durch die der Folienstreifen 100 zu einem gewellten Streifen 101 umgeformt wird. Im Kasten a ist das Profil des Streifens 101 in etwas übertriebener Form dargestellt. Bei der Nachformung in der Vorrichtung 1 entsteht ein Streifen 102 mit dem im Kasten b angedeuteten Profil und entsprechend ergibt sich in der Vorrichtung 2 ein Streifen 103 mit dem Profil des Kastens c. In der Einrichtung 3 wird die Höhe h des Streifens 103 gemessen. In einer Logikschaltung wird diese Messgrösse mit einem Sollwert verglichen und aufgrund einer Abweichung vom Sollwert ein Steuersignal erzeugt. Mit dem Stellmotor 30 wird in Abhängigkeit von dem Steuersignal beim zweiten Nachformschritt der Faltwinkel korrigierend beeinflusst, indem der Abstand zwischen einer Zahnwalze und einem Prägewerkzeug der Taumelpressvorrichtung 2 verändert wird.

Bei bekannten Plissierwalzen erfährt der Streifen bei der Bearbeitung im Walzenpaar eine axiale Verschiebung. Ein kontinuierliches Verfahren ist mit einer solchen Vorrichtung nicht möglich. Mit einer neu entwickelten Plissierwalze (vgl. parallel eingereichte Anmeldung) lässt sich aber dieser Mangel beheben. Diese neue Plissierwalze ist in der Anlage der Fig.1 vorgesehen. Sie ist durch folgende Merkmale gekennzeichnet:

Die Zähne der beiden Walzen bestehen aus beweglichen leistenförmigen Elementen, die in Nuten axial verschiebbar sind, und es sind Führungsmittel für die Zähne derart vorgesehen, dass aufgrund einer Zwangsführung der Zähne der Folienstreifen auf einer raumfesten Bahn transportierbar ist.

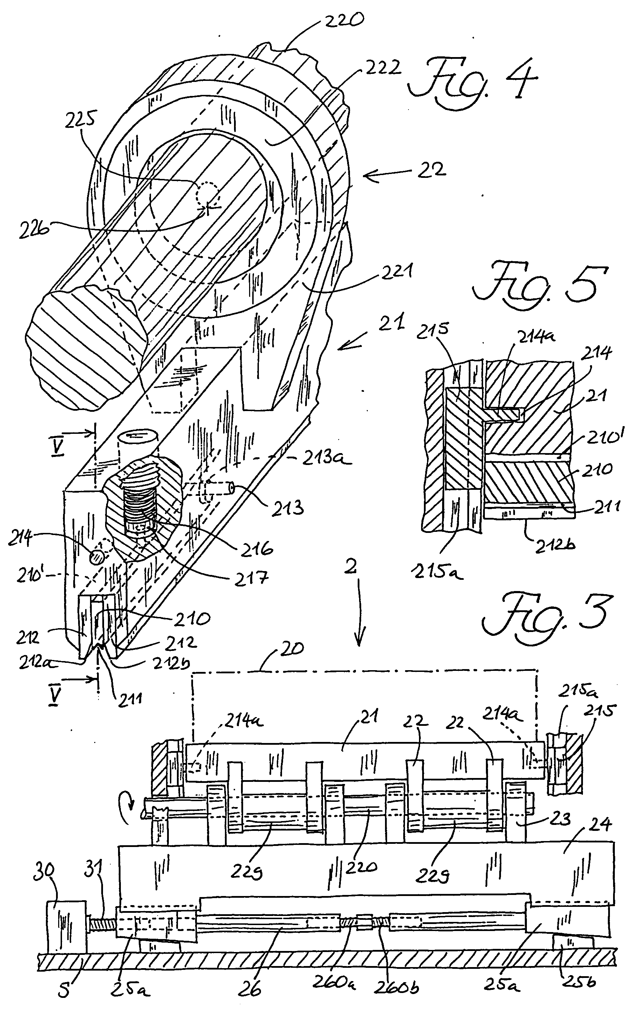

Statt mit einer Plissierwalze kann die Vorplissierung auch durch Pressen mit einem oszillierenden Prägewerkzeug ausgeführt werden. In Fig.2 ist ausschnittsweise ein Querschnitt durch ein derartiges Werkzeug gezeigt. Mit dem Doppelpfeil 11 ist angedeutet, dass der obere Teil 10a eine oszillierende Auf-Abbewegung ausführt, während der untere Teil 10b eine raumfeste Gegenform zum Teil 10a bildet. Beim Prägen der Wellenform wird der Streifen 100 im offenen Zustand des Prägewerkzeugs um eine Wellenlänge λ in Laufrichtung weitertransportiert. Gegenüber dem Vorplissieren mit einer Plissierwalze besteht unter anderem der Nachteil, dass mit dem oszillierenden Prägewerkzeug weniger grosse Durchsätze erreicht werden können.

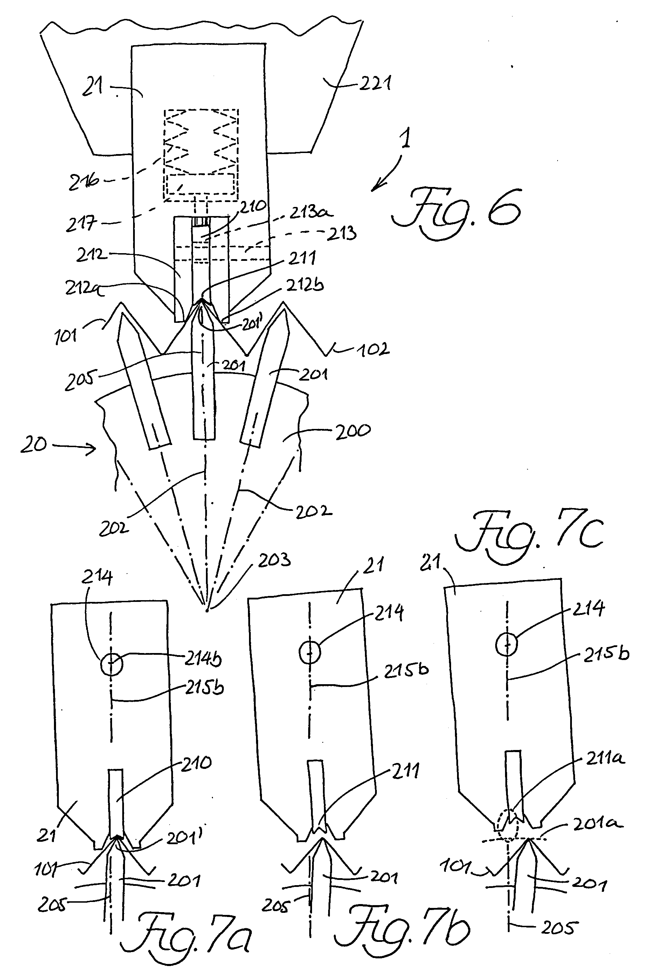

Die Figuren 3 bis 7c beziehen sich auf das Nachformen mit den Taumelpressvorrichtungen 1 und 2. Die beiden Vorrichtungen 1 und 2 sind im wesentlichen gleich konstruiert. Sie umfassen jeweils eine drehbare Zahnwalze 20 und ein Prägewerkzeug 21, das eine Taumelbewegung ausführt. Bei der Vorrichtung 1 ist das Prägewerkzeug 21 über der Zahnwalze 20 angeordnet; bei der Vorrichtung 2 ist es umgekehrt. In Fig.3 ist die Vorrichtung 2 dargestellt, die gegenüber der Vorrichtung 1 den Stellmotor 30 als zusätzliche Komponente aufweist. Das Prägewerkzeug 21 der Fig.4 ist in der Orientierung dargestellt, die in der Vorrichtung 1 vorliegt.

Bei der Taumelpressvorrichtung der Fig.3 ist eine drehbare Zahnwalze 20 nur strichpunktiert angedeutet. Das Prägewerkzeug 21 wird mit einem Exzenter 22 angetrieben. Es ist über Pendelachsen 214a mit jeweils einem Gleitkörper 215 verbunden, der in einer Schiene 215a vertikal geführt wird. Eine Exzenterwelle 220 ist drehbar in Ständern 23 gelagert, die auf einer Brücke 24 befestigt sind. Ein Antrieb der Welle 220 ist nicht dargestellt. Zwischen jeweils zwei Exzentern 22 ist eine Ausgleichsmasse 229 angeordnet.

Die Brücke 24 kann mittels Keilen 25a - durch Verschieben gegen raumfeste Keile 25b, die auf einer Basisplatte 5 befestigt sind, - in der Höhe verstellt werden. Eine allfällige Höhenänderung zwecks Regelung der Faltgeometrie lässt sich mit dem Stellmotor 30 und einer Spindel 31 vornehmen. Aufgrund der Möglichkeit, die Länge einer Verbindungsstange 26 zwischen den Keilen 25a mit Gewindestangen 260a und 260b zu verändern, lässt sich die horizontale Ausrichtung der Brücke 24 auf einfache Weise einstellen.

Fig.4 zeigt Details des Prägewerkzeugs 21 und des Exzenters 22. Das Prägewerkzeug 21 ist stangenförmig und weist eine Nut für ein in ihr bewegbares Prägeteil 210 auf. Die Nut wird durch zwei leistenförmige Elemente 212 gebildet, die selbst in einer Nut 210' liegen und in dieser seitlich befestigt sind. In dem Prägeteil 210 ist ein V-förmiger Einschnitt 211 für die Bearbeitung der Faltkante vorgesehen. Mindestens eine im Prägewerkzeug 21 angeordnete Druckfeder 216, beispielsweise eine Tellerfeder, wirkt über einen Stössel 217 auf das Prägeteil 210 ein. Mit Stiften 213 in Langlöchern 213a wird die Verschiebbarkeit des Prägeteils 210 auf ein vorgebbares Intervall eingeschränkt. Die zwei Kanten 212a und 212b der Elemente 212, die parallel zur Nut 210' verlaufen, definieren zusammen mit dem V-förmigen Einschnitt 211 des Prägeteils 210 die Geometrie der Faltung, d.h. von Biegeradius und Faltwinkel.

An den beiden Endseiten weist das Prägewerkzeug 21 je eine horizontale Bohrung 214 für eine Pendelachse 214a auf. Die Linie V-V in Fig.4 gibt die Lage eines Schnittes durch die Bohrung 214 an; dieser Schnitt ist in Fig.5 dargestellt. Die Pendelachse 214a ist mit einem vertikal verschiebbaren Gleitkörper 215 verbunden, der in einer Schiene 215a gleiten kann.

Der Mittelpunkt 226 des Exzenters 22 - siehe Fig.4 - bewegt sich beim Drehen der Welle 220 auf dem Exzenterkreis 225. Das Prägewerkzeug 21 ist am Pleuel 221 befestigt. Zwischen Pleuel 221 und Welle 220 befindet sich das zur Welle exzentrisch angeordnete Lager 222.

Die Figuren 6 und 7a-c zeigen das Zusammenwirken von Prägewerkzeug 21 und Zahnwalze 20 beim Nachformen des vorplissierten Folienstreifens 101 bzw. 102. Die Bedeutung der Bezugszeichen, die den Teilen des Prägewerkzeugs 21 zugeordnet sind, sind bereits bekannt. Bei der Zahnwalze 20 gilt für die Bezugszeichen folgende Zuordnung: Walzenkörper 200, Zahn 201, Zahn-Mittellinie 202, Walzenachse 203 und Vertikale 205 durch die Achse 203.

Die Zähne 201 sind in Nuten des Walzenkörpers 200 befestigt. Der Winkel zwischen benachbarten Mittellinien 202 beträgt beispielsweise 15°. Alle Mittellinien 202 schneiden sich auf der Walzenachse 203. In Fig.6 fällt die Vertikale 205 mit einer Mittellinie 202 zusammen.

In der Arbeitsphase der Fig.6 ist die Prägung eines Faltwinkels gerade abgeschlossen. Die Spitze 201' des mittleren Zahns 201 befindet sich in maximalem Eingriff mit dem V-förmigen Einschnitt 211 des Prägeteils 210. Der Krümmungsradius der bearbeiteten Faltkante, die zwischen den beiden prägenden Oberflächen der Spitze 201' bzw. des Einschnitts 211 liegt, ist durch die Prägung verkleinert worden. Gleichzeitig ist der zugehörige Faltwinkel durch den Einschnitt 211 sowie die Zahnspitze 201' und die beiden Kanten 212a und 212b geformt worden.

Bei der weiteren Bewegung des Prägewerkzeugs 21 und der Zahnwalze 20 vergrössert sich wieder der Abstand zwischen der Zahnspitze 201' und dem Prägewerkzeug 21. Das Prägeteil 210 wird durch die Druckfeder 216 aus ihrer Nut um ein kurzes Wegstück gegen die Zahnwalze 20 verschoben. Diese Arbeitsphase ist in Fig.7a zu sehen. In den anschliessenden Arbeitsphasen der Figuren 7b und 7c öffnet sich zwischen dem Einschnitt 211 und der Zahnspitze 201' eine wachsende Lücke.

In Fig.7c stellt eine ovale Kurve 211a die Bahn des Einschnitts 211 dar, die aufgrund der Taumelbewegung des Exzenters 22 gegeben ist. Bei dieser Taumelbewegung macht der Mittelpunkt 214b der Pendelachse 214a bzw. der zugehörigen Bohrung 214 eine Auf- und Abbewegung auf der Vertikalen 215b, die kolinear zur Vertikalen 205 ist. Die Zahnspitze 201' bewegt sich auf der Kreislinie 201a, die das Oval 211a in zwei Punkten schneidet. Zwischen diesen Schnittpunkten - siehe Arbeitsphase in Fig.6 - wird das Prägeteil 211 durch den Zahn 201 gegen die Kraft der Feder 216 in das Prägewerkzeug 21 gedrückt.

Es ist möglich, dass mit dem Prägewerkzeug der Taumelpressvorrichtung nur gerade die Faltkanten nachgeformt werden sollen. Dann sind die beiden leistenförmigen Elemente 212 nicht nötig und es muss das Prägewerkzeug nur das Prägeteil 210 mit dem V-förmigen Einschnitt aufweisen.

## Patentansprüche

1. Verfahren zum zickzackartigen Falten einer streifenförmigen Folie, folgende Schritte umfassend:
Vorplissieren, wobei eine zickzackartige oder wellenförmige Faltung vorgenommen wird, bei der die Scheitellinien der Faltung konstante vorbestimmte Abstände aufweisen, und
Nachformen der Faltung mittels mindestens eines Prägewerkzeugs, indem entlang den Scheitellinien jeweils eine Faltkante mit einem vorgegenbenen Krümmungsradius erzeugt wird.

2. Verfahren nach Anspruch 1, dadurch gekennzeichnet, dass bei der Nachformung gleichzeitig die Faltwinkel beeinflusst werden, wobei durch das Prägewerkzeug die Formung der Falkanten und der zugeordneten Faltwinkel in kombinierter Weise ausgeführt werden.

3. Verfahren nach Anspruch 1 oder 2, dadurch gekennzeichnet, dass die Nachformung in zwei Schritten ausgeführt wird, wobei mit einem ersten Prägewerkzeug jede zweite Faltkante und anschliessend mit einem zweiten Prägewerkzeug die übrigen Faltkanten bearbeitet werden.

4. Verfahren nach einem der Ansprüche 1 bis 3, dadurch gekennzeichnet, dass das Nachformen mittels Taumelpressens ausgeführt wird.

5. Verfahren nach einem der Ansprüche 1 bis 4, dadurch gekennzeichnet, dass das Vorplissieren mit Zahnwalzen ausgeführt wird (Fig.1).

6. Verfahren nach einem der Ansprüche 1 bis 5, dadurch gekennzeichnet, dass das Vorplissieren durch Pressen mit einem oszillierenden Prägewerkzeug ausgeführt wird (Fig.2).

7. Verfahren nach einem der Ansprüche 1 bis 6, dadurch gekennzeichnet, dass der Folienstreifen nach erfolgtem Vorplissieren kontinuierlich zu und durch die Nachformungsstellen weitertransportiert wird.

8. Verfahren nach Anspruch 7, dadurch gekennzeichnet, dass nach dem Nachformen eine charakteristische Dimension, insbesondere die Höhe, des bearbeiteten Streifens gemessen, diese Messgrösse mit einem Sollwert verglichen und aufgrund einer Abweichung vom Sollwert der Faltwinkel beim Nachformen korrigierend beeinflusst wird.

9. Verfahren nach den Ansprüchen 8 und 3, dadurch gekennzeichnet, dass die Korrektur des Faltwinkels im zweiten Nachformschritt ausgeführt wird.

10. Taumelpressvorrichtung (1, 2) zum Ausführen der Nachformschritte in einem Verfahren gemäss Anspruch 4, eine drehbare Zahnwalze (20) und ein Prägewerkzeug (21) umfassend, wobei das Prägewerkzeug mit einem Exzenter (22) antreibbar ist und über eine Pendelachse (214a) mit einem vertikal verschiebbaren Gleitkörper (215)verbunden ist und wobei das Prägewerkzeug im Zusammenspiel mit jeweils einem Zahn (201) der Walze (20) den Krümmungsradius einer Faltkante verkleinern sowie den zugehörigen Faltwinkel beeinflussen kann.

11. Vorrichtung nach Anspruch 10, dadurch gekennzeichnet, dass das Prägewerkzeug (21) eine Nut für ein stangenförmiges Prägeteil (210) aufweist, dass in dem Prägeteil ein V-förmiger Einschnitt (211) für die Bearbeitung der Faltkante vorgesehen ist und dass das Prägeteil gegen die Kraft von mindestens einer im Prägewerkzeug angeordneten Druckfeder (216) bewegbar ist.

12. Vorrichtung nach Anspruch 10, dadurch gekennzeichnet, dass am Prägewerkzeug (21) parallel zur Nut des Prägeteils (210) zwei Kanten (212a, 212b) angeordnet sind, die zusammen mit dem V-förmigen Einschnitt (211) des Prägeteils für die Formung des Faltwinkels vorgesehen sind.

13. Vorrichtung nach einem der Ansprüche 10 bis 12, dadurch gekennzeichnet, dass die Exzenter (22), insbesondere deren Welle (220) oder Lagerung (23), derart verschiebbar ausgebildet sind, dass der Abstand zwischen der Zahnwalze (20) und dem Prägewerkzeug (21) veränderbar ist.

14. Anlage für die Herstellung eines zickzackförmigen Folienstreifens (103) mit einem Verfahren gemäss einem der Ansprüchen 1 bis 9, folgende in Serie angeordnete Vorrichtungen umfassend:
eine Zahnwalze (10) zum Vorplissieren,
eine erste Taumelpressvorrichtung (1) gemäss einem der Ansprüche 10 bis 13 zum Nachformen jeder zweiten Faltkante und
eine zweite Taumelpressvorrichtung (2) gemäss einem der Ansprüche 10 bis 13 zum Nachformen der übrigen Faltkanten.

15. Anlage nach Anspruch 14, dadurch gekennzeichnet, dass eine Regelungseinrichtung (3, 3a, 30) für die Einstellung des Faltwinkels vorliegt, die folgende Teile umfasst:
anschliessend an die zweite Taumelpressvorrichtung (2) eine Messeinrichtung (3) für die Bestimmung der Höhe (h) des gefalteten Streifens (103),
eine Logikschaltung (3) zum Erzeugen eines Steuersignals aufgrund einer in der Messeinrichtung vorgenommenen Messung und
ein an der zweiten Taumelpressvorrichtung angeordneter Stellmotor (30), mit dem in Abhängigkeit von dem Steuersignal der Abstand zwischen der Zahnwalze (20) und dem Prägewerkzeug (21) veränderbar ist.

## Claims

1. Method for the zigzag-like folding of a strip-like foil comprising the following steps:
prepleating with a zigzag-like or wave-like folding being effected, with the apex lines of the folding having constant predetermined spacings, and
follow-up forming of the folding by means of at least one coining tool in that a folded edge with a predetermined radius of curvature is generated along each of the apex lines.

2. Method in accordance with claim 1, characterized in that during the follow-up folding the fold angle is simultaneously influenced, with the forming of the folded edges and of the associated fold angle being executed in combined manner by the coining tool.

3. Method in accordance with claim 1 or claim 2, characterized in that the follow-up forming is executed in two steps, with a first coining tool working on every second folded edge and with the other folded edges being subsequently worked on with a second coining tool.

4. Method in accordance with one of the claims 1 to 3, characterized in that the follow-up forming is executed by means of pressing using an oscillating motion.

5. Method in accordance with one of the claims 1 to 4, characterized in that the prepleating is executed with toothed rolls (Fig. 1).

6. Method in accordance with one of the claims 1 to 5, characterized in that the prepleating is executed by pressing with an oscillating coining tool (Fig. 2).

7. Method in accordance with one of the claims 1 to 6, characterized in that the foil strip is continuously transported to and on further through the follow-up forming stations after prepleating has taken place.

8. Method in accordance with claim 7, characterized in that after the follow-up forming a characteristic dimension, in particular the height, of the processed strip is measured, this measured parameter is compared with a desired value and the fold angle is correctively influenced during follow-up forming as a result of a deviation from the desired value.

9. Method in accordance with claims 8 and 3, characterized in that the correction of the fold angle is effected in the second follow-up forming step.

10. Oscillating motion pressing device (1, 2) for executing the follow-up forming steps in a method in accordance with claim 4, comprising a rotatable toothed roll (20) and a coining tool (21), with the coining tool being drivable via an eccentric device (22) and being connected via a pendulum axle (214a) with a vertically displaceable slider (215), and wherein the coining tool can reduce the radius of curvature of a folded edge and can also influence the associated fold angle in corporation with a respective tooth (201) of the roll (20).

11. Device in accordance with claim 10, characterized in that the coining tool (21) has a groove for a bar-like coining element (210); in that a V-shaped groove (211) for the working of the folded edge is provided in the coining element; and in that the coining element is movable against the force of at least one compression spring (216) arranged in the coining tool.

12. Device in accordance with claim 10, characterized in that two edges (212a, 212b) are arranged on the coining tool (21) parallel to the groove of the coining element (210) and are provided together with the V-shaped groove (211) of the coining element for the forming of the fold angle.

13. Device in accordance with one of the claims 10 to 12, characterized in that the eccentric device (22), in particular its shaft (220) or support (23) are displaceably designed in such a way that the spacing between the toothed roll (20) and the coining tool (21) can be varied.

14. Plant for manufacture of a zigzag-like foil strip (103) with a method in accordance with one of the claims 1 to 9, comprising the following devices arranged in series:
a toothed roll (10) for the prepleating,
a first oscillating motion pressing device (1) in accordance with one of the claims 10 to 13 for the follow-up forming of each second folded edge, and
a second oscillating motion pressing device (2) in accordance with one of the claims 10 to 13 for the follow-up forming of the remaining folded edges.

15. Plant in accordance with claim 14, characterized in that a regulating device (3, 3a, 30) is present for the adjustment of the fold angle and has the following parts:
a measuring device (3) following the second oscillating motion pressing device (2) for the determination of the height (h) of the folded strip (103),
a logic circuit (3) for generating a control signal as a result of a measurement effected in the measuring device, and
a positioning motor (30) arranged at the second oscillating motion pressing device by means of which the spacing between the toothed roll (20) and the coining tool (21) can be changed in dependence on the control signal.

## Revendications

1. Procédé pour le pliage en zigzag d'une feuille en forme de bande, comprenant les étapes suivantes :
le plissage préalable, où il est réalisé un pliage en zigzag ou en forme d'ondes, où les lignes de sommet du pliage présentent des écarts constants prédéterminés, et
formage subséquent du pliage par au moins un outil de frappe, en ce qu'il est produit le long des lignes de sommet, respectivement une arête de pliage d'un rayon de courbure prédéterminé.

2. Procédé selon la revendication 1, caractérisé en ce que, lors du formage subséquent, on agit également sur les angles de pliage, où par l'outil de frappe, la formation des arêtes de pliage et des angles de pliage associés est exécutée d'une manière combinée.

3. Procédé selon la revendication 1 ou 2, caractérisé en ce que le formage subséquent est exécuté en deux étapes, où sont traitées, avec un premier outil de frappe, chaque deuxième arête de pliage et, ensuite, avec un deuxième outil de frappe, les autres arêtes de pliage.

4. Procédé selon l'une des revendications 1 à 3, caractérisé en ce que le formage subséquent est réalisé par un pressage oscillant.

5. Procédé selon l'une des revendications 1 à 4, caractérisé en ce que le plissage préalable est exécuté avec des rouleaux dentés (figure 1).

6. Procédé selon l'une des revendications 1 à 5, caractérisé en ce que le plissage préalable est exécuté par pressage avec un outil de frappe oscillant (figure 2).

7. Procédé selon l'une des revendications 1 à 6, caractérisé en ce que la bande en feuille, après le plissage préalable, est acheminée continuellement vers et à travers les postes de formage subséquent.

8. Procédé selon la revendication 7, caractérisé en ce qu'on mesure, après le formage subséquent, une dimension caractéristique, notamment la hauteur, de la bande traitée, qu'on compare cette grandeur de mesure avec une valeur de consigne et, à la suite d'un écart relativement à la valeur de consigne, l'angle de pliage est corrigé lors du formage subséquent.

9. Procédé selon les revendications 8 et 3, caractérisé en ce que la correction de l'angle de pliage a lieu lors de la deuxième étape de formage subséquent.

10. Dispositif de pression oscillant (1, 2) pour exécuter les étapes de formage subséquent, dans un procédé selon la revendication 4, comprenant un rouleau denté tournant (20) et un outil de frappe (21), où l'outil de frappe peut être entraîné par un excentrique (22) et est relié par un axe pendulaire (214a) à un corps de glissement (215) déplaçable verticalement et où l'outil de frappe, en coopération avec respectivement une dent (201) du rouleau (20), peut diminuer le rayon de courbure d'une arête de pliage et agir sur l'angle de pliage associé.

11. Dispositif selon la revendication 10, caractérisé en ce que l'outil de frappe (21) présente une rainure pour une pièce de frappe (210) en forme de tige, qu'il est prévu, dans la pièce de frappe, une entaille en forme de V (211) pour traiter l'arête de pliage, et en ce que la pièce de frappe est déplaçable contre la force d'au moins un ressort de pression (216) disposé dans l'outil de frappe.

12. Dispositif selon la revendication 10, caractérisé en ce que sont disposés à l'outil de frappe (21), parallèlement à la rainure de la pièce de frappe (210), deux arêtes (212a, 212b) qui sont prévues conjointement avec l'entaille en forme de V (211) de la pièce de frappe, pour former l'angle de pliage.

13. Dispositif selon l'une des revendications 10 à 12, caractérisé en ce que les excentriques (22), notamment leur arbre (220) ou palier (23), sont réalisés de manière déplaçable pour que l'écart entre le rouleau denté (20) et l'outil de frappe (21) puisse être modifié.

14. Installation pour la fabrication d'une bande en feuille en forme de zigzag (103) selon un procédé conformément à l'une des revendications 1 à 9, comprenant les dispositifs suivants disposés en série :
un rouleau denté (10) pour le plissage préalable,
un premier dispositif de pression oscillant (1) selon l'une des revendications 10 à 13, pour le formage subséquent de chaque deuxième arête de pliage, et
un deuxième dispositif de pression oscillant (2) selon l'une des revendications 10 à 13, pour le formage subséquent des arêtes de pliage restantes.

15. Installation selon la revendication 14, caractérisée en ce qu'il est prévu un dispositif de réglage (3, 3a, 30) pour le réglage de l'angle de pliage, qui comprend les parties suivantes :
à la suite du deuxième dispositif de pression oscillant (2), un dispositif de mesure (3) pour déterminer la hauteur (h) de la bande pliée (103),
un circuit logique (3) pour produire un signal de commande sur la base d'une mesure effectuée dans un dispositif de mesure, et
un moteur de positionnement (30) disposé au deuxième dispositif de pression oscillant, au moyen duquel, en fonction du signal de commande, l'écart peut être modifié entre le rouleau denté (20) et l'outil de frappe (21).
